# EUROPEAN PATENT APPLICATION

(11) **EP 4 650 529 A1**
(43) Date of publication of application: **19.11.2025**
(21) Application number: 23930892.7
(22) Date of filing: 08.12.2023
(51) Int. Cl.: E02F 9/18

(54) **WORK MACHINE**

(30) Priority: 31.03.2023 JP 2023058891
(71) Applicant: Hitachi Construction Machinery Co., Ltd., Tokyo 110-0015 (JP)
(72) Inventor: ANDO, Akihiro, Tsuchiura-shi, Ibaraki 300-0013 (JP); YOSHIMURA, Yuto, Tsuchiura-shi, Ibaraki 300-0013 (JP); TSUJIMOTO Yuya, Tsuchiura-shi, Ibaraki 300-0013 (JP)
(74) Representative: Manitz Finsterwald Patent- und Rechtsanwaltspartnerschaft mbB
(86) International application number: PCT/JP2023/044042
(87) International publication number: WO 2024/202268

(57) **Abstract**

A working machine comprises a vehicle body, a counterweight, a support bracket fixed to the vehicle body, a main arm with a base end part pivotally supported by the support bracket and a tip part pivotally connected to the counterweight via a connecting member, and a hydraulic cylinder with a base end part pivotally supported by the support bracket and a tip part pivotally connected to the tip side of the main arm, furthermore, the working machine can attach the counterweight to the vehicle body by rotating the main arm upward through the extension of the hydraulic cylinder, and remove the counterweight from the vehicle body by rotating the main arm downward through the compression of the hydraulic cylinder, wherein an auxiliary arm is attached on the support bracket, which pulls in the counterweight towards the support bracket side by interlocking with the upward rotation of the main arm.

## Description

### Technical Field

The present invention relates to a working machine equipped with a detachable counterweight.

### Background Art

Generally, in working machines such as hydraulic excavators, a front working machine is arranged on the front side of the vehicle body, and a counterweight is arranged on the rear side to balance the front working machine. Additionally, working machines equipped with a counterweight detachable device are known, allowing the counterweight to be removed from the vehicle body during transport and attached during operation (for example, Patent Document 1).

The detachable device described in Patent Document 1 involves attaching the counterweight pivotally to the tip of a rotating arm supported by a back plate, and moving the counterweight towards the back plate to rotate the arm by extending a hydraulic cylinder.

### Citation List

### Patent Literature

Patent Literature 1: Japanese Patent No. 2922778

### Summary of Invention

### Technical Problem

However, when the vehicle body is positioned on an upward-sloping terrain and an attempt is made to attach the counterweight using the detachable device from Patent Document 1, the counterweight tilts due to its own weight around the pivoting part at the tip of the rotating arm, causing the lower end of the counterweight to separate from the back plate. Therefore, the problem is that it is difficult to properly attach the counterweight on an upward-sloping terrain.

The present invention was made in view of the above problems, and its purpose is to provide a working machine capable of properly attaching a counterweight.

### Solution To Problem

To achieve the above objective, the working machine of the present invention includes a vehicle body, a counterweight arranged at the rear of the vehicle body, and a support bracket fixed to the vehicle body. It also has a main arm with a base end part pivotally supported by the support bracket and a tip part pivotally connected to the counterweight via a connecting member. Furthermore, it includes a hydraulic cylinder with a base end part pivotally supported by the support bracket and a tip part pivotally connected to the tip side of the main arm. Additionally, the working machine can attach the counterweight to the vehicle body by rotating the main arm upward through the extension of the hydraulic cylinder, and remove the counterweight from the vehicle body by rotating the main arm downward through the compression of the hydraulic cylinder. Furthermore, an auxiliary arm, which is driven in conjunction with the upward rotation of the main arm by the extension of the hydraulic cylinder, is also attached on the support bracket of the working machine. The auxiliary arm can pull in the counterweight towards the support bracket side.

### Advantageous Effects of Invention

According to the present invention, a working machine capable of properly attaching a counterweight can be obtained. It should be noted that other problems, configurations, and effects besides those mentioned above will be clarified through the description of the embodiments below.

### Brief Description of Drawings

[FIG. 1] is a side view of a hydraulic excavator.
[FIG. 2] is a rear perspective view of the back plate and detachable device.
[FIG. 3] is a perspective view of the counterweight.
[FIG. 4] is a side view showing the state where the counterweight placed on upward-sloping ground is connected to the connecting member.
[FIG. 5] is a side view showing the state before the pin passes through the movement trace of the tip part of the auxiliary arm.
[FIG. 6] is a side view showing the state where the pin is positioned on the movement trace of the tip part of the auxiliary arm.
[FIG. 7] is a side view showing the state after the pin has passed through the movement trace of the tip part of the auxiliary arm.
[FIG. 8] is a side view showing the state where the counterweight is completely attached to the back plate.
[FIG. 9] is a side view showing the state where hydraulic oil is discharged from the hydraulic cylinder after the counterweight is completely attached to the back plate.
[FIG. 10] is a diagram showing the state corresponding to FIG. 8 of the hydraulic excavator placed on downward-sloping ground.
[FIG. 11A] is a side view of the auxiliary arm in a shortened state according to modification example 1.
[FIG. 11B] is a perspective view of the auxiliary arm in a shortened state according to modification example 1.
[FIG. 12A] is a side view of the auxiliary arm in an extended state according to modification example 1.
[FIG. 12B] is a perspective view of the auxiliary arm in an extended state according to modification example 1.
[FIG. 13A] is a side view of the auxiliary arm in a shortened state according to modification example 2.
[FIG. 13B] is a perspective view of the auxiliary arm in a shortened state according to modification example 2.
[FIG. 14A] is a side view of the auxiliary arm in an extended state according to modification example 2.
[FIG. 14B] is a perspective view of the auxiliary arm in an extended state according to modification example 2.
[FIG. 15A] is a diagram showing the concave groove according to modification example 3.
[FIG. 15B] is a diagram showing the auxiliary arm according to modification example 3.

### Description Of Embodiments

The embodiment of the hydraulic excavator 1 (working machine) according to the present invention will be described with reference to the drawings. However, the specific example of the working machine is not limited to the hydraulic excavator 1, and may be any machine equipped with a counterweight, such as a crane truck. Furthermore, the terms front, rear, left, and right in this specification are based on the perspective of the operator boarding the hydraulic excavator 1, unless otherwise specified.

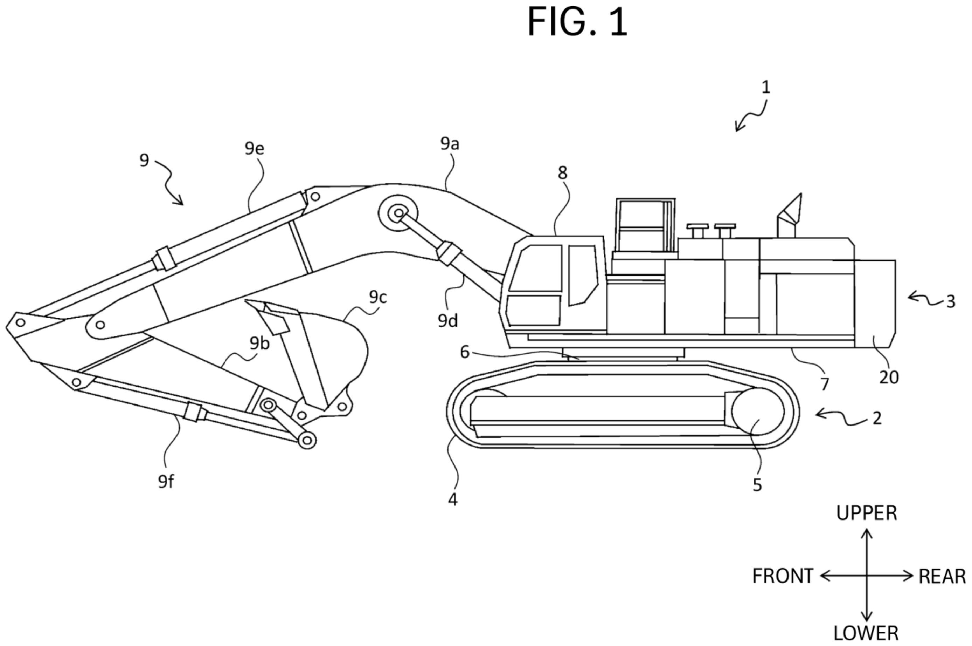

FIG. 1 is a side view of the hydraulic excavator 1. As shown in FIG. 1, the hydraulic excavator 1 includes a lower travel body 2 and an upper swing body 3 supported by the lower travel body 2. The lower travel body 2 and the upper swing body 3 are examples of the vehicle body.

The lower travel body 2 is equipped with a pair of left and right crawlers 4, which are endless tracks. Then, the pair of left and right crawlers 4 rotate independently by the drive of the travel motor 5. As a result, the hydraulic excavator 1 travels. However, the lower travel body 2 may be wheeled instead of using crawlers 4.

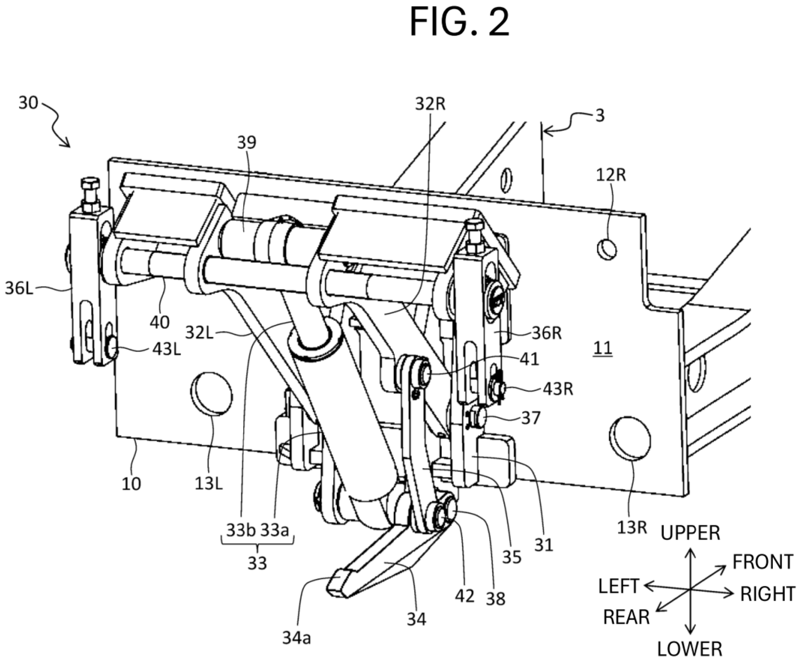

The upper swing body 3 is supported by the lower travel body 2 so as to be able to swing by the swing device 6. That is, the upper swing body 3 swings relative to the lower travel body 2 by the rotation of the swing device 6. The upper swing body 3 mainly includes a base swing frame 7, a cab (driver's seat) 8 arranged on the front left side of the swing frame 7, a front working machine 9 (working device) mounted on the front center of the swing frame 7 so as to be pivotable in the vertical direction, a back plate 10 (see FIG. 2) attached to the rear end of the upper swing body 3, a counterweight 20 arranged at the rear of the swing frame 7, and a detachable device 30 (see FIG. 2) for attaching and detaching the counterweight 20 to the back plate 10.

The cab 8 is arranged adjacent to the front working machine 9 in the lateral direction (width direction of the vehicle body). More specifically, the cab 8 is arranged on the left side (one side in the lateral direction) of the front working machine 9. However, the arrangement of the cab 8 is not limited to the aforementioned example, and the cab 8 may be arranged on one side of the front working machine 9 in the lateral direction.

A space is formed in the cab 8 for the operator to board and operate the hydraulic excavator 1. Inside the cab 8, a seat for the operator to sit and an operating device operated by the seated operator are arranged. The operating device receives the operator's operation to drive the hydraulic excavator 1. By the operator operating the operating device, the lower travel body 2 travels, the upper swing body 3 swings, and the front working machine 9 drives. Specific examples of the operating device include levers, steering wheels, pedals, switches, etc.

The front working machine 9 includes a boom 9a supported by an upper swing body 3 capable of moving up and down, an arm 9b pivotally supported at the tip of the boom 9a, and a bucket 9c (attachment) pivotally supported at the tip of the arm 9b. Additionally, the front working machine 9 includes a boom cylinder 9d for driving the boom 9a, an arm cylinder 9e for driving the arm 9b, and a bucket cylinder 9f for driving the bucket 9c. It should be noted that the specific example of the attachment is not limited to the bucket 9c, and may be a grapple, cutter, crusher, breaker, etc.

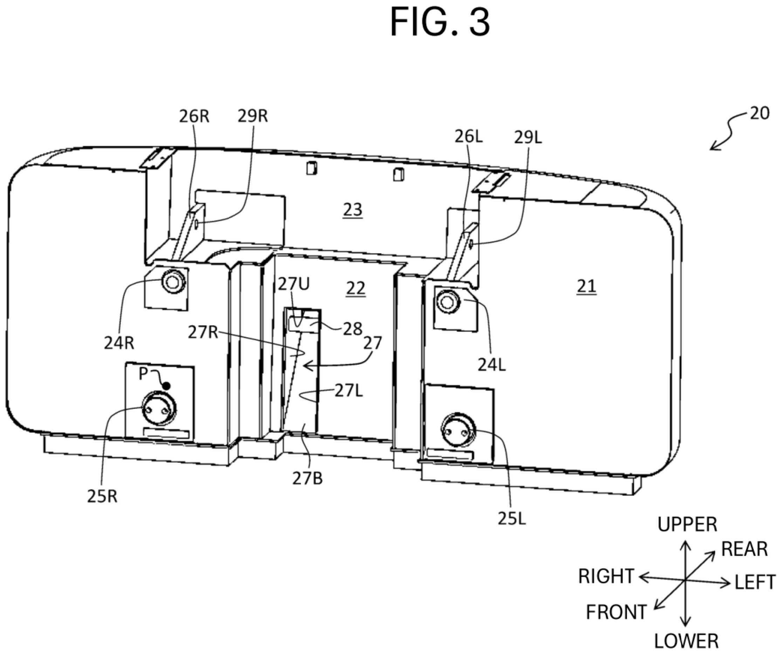

Next, with reference to FIGS. 2 and 3, the configuration of the back plate 10, counterweight 20, and detachable device 30 will be described. FIG. 2 is a rear perspective view of the back plate 10 and detachable device 30. FIG. 3 is a perspective view of the counterweight 20.

It should be noted that the directions in the following description are defined based on the upper swing body 3. That is, the front side of the operator boarding the cab 8 is referred to as the "front side of the upper swing body 3," the opposite side is referred to as the "rear side of the upper swing body 3," and the lateral direction when facing the front side is referred to as the "lateral direction of the upper swing body 3." However, in the following description, "of the upper swing body 3" is omitted, and simply "front side," "rear side," and "lateral direction" are used. Similarly, "upper side of the upper swing body 3," "lower side of the upper swing body 3," "longitudinal direction of the upper swing body 3," and "vertical direction of the upper swing body 3" are also abbreviated to simply "upper side," "lower side," "longitudinal direction," and "vertical direction."

As shown in FIG. 2, the back plate 10 is a flat-shaped member extending in the vertical and lateral directions behind the front working machine 9 of the upper swing body 3 (in this embodiment, at the rear end of the upper swing body 3). Hereinafter, the surface facing the rear side of the back plate 10 (the surface facing the attached counterweight 20) is referred to as "back surface 11." The back plate 10 is formed with a pair of first through holes 12L, 12R (in FIG. 2, 12L is omitted) and a pair of second through holes 13L, 13R.

The first through holes 12L, 12R and the second through holes 13L, 13R penetrate the back plate 10 in the thickness direction (longitudinal direction). The first through holes 12L, 12R are formed at positions spaced apart in the lateral direction across the detachable device 30. The second through holes 13L, 13R are formed at positions spaced apart in the lateral direction across the detachable device 30. The first through holes 12L, 12R and the second through holes 13L, 13R are formed at positions spaced apart in the vertical direction. More specifically, the second through holes 13L, 13R are formed below the first through holes 12L, 12R.

The counterweight 20 is a heavy object used to balance the weight with the front working machine 9. Hereinafter, the surface of the counterweight 20 facing forward (the surface facing the back plate 10 when mounted) is referred to as the ""ventral surface 21"". As shown in FIG. 3, concave portions 22, 23 are formed on the ventral surface 21 of the counterweight 20. Additionally, the counterweight 20 includes a pair of first bosses 24L, 24R, a pair of second bosses 25L, 25R, a pair of connecting brackets 26L, 26R, a concave groove 27 (concave portion), and a pin 28 (engagement member).

The concave portion 22 is a recessed area located at the central part in the lateral direction, below the concave portion 23, and extending rearward from the ventral surface 21. The concave portion 23 is a recessed part at the center in the lateral direction, above the concave portion 22, and extending rearward from the ventral surface 21. The width of the concave portion 23 in the lateral direction is larger than that of the concave portion 22. Additionally, in the vertical direction, the concave portions 22 and 23 are interconnected. Furthermore, the front surfaces of the concave portions 22 and 23, the bottom surface of concave portion 22, and the top surface of concave portion 23 are open.

The first bosses 24L and 24R are positioned apart in the lateral direction, sandwiching the concave portion 22. The second bosses 25L and 25R are positioned apart in the lateral direction, sandwiching the concave portion 22. The first bosses 24L and 24R and the second bosses 25L and 25R are positioned apart in the vertical direction. More specifically, the second bosses 25L and 25R are positioned below the first bosses 24L and 24R.

The first bosses 24L and 24R and the second bosses 25L and 25R protrude forward from the ventral surface 21 of the counterweight 20. Additionally, bolt holes are formed on the front surfaces of the first bosses 24L and 24R and the second bosses 25L and 25R. When the counterweight 20 is mounted on the back plate 10, the first bosses 24L and 24R are coaxially aligned with the first through holes 12L and 12R in the longitudinal direction, and the second bosses 25L and 25R enter the second through holes 13L and 13R. In this state, by screwing bolts into the bolt holes of the first bosses 24L and 24R and the second bosses 25L and 25R from the front side of the back plate 10, the counterweight 20 is fixed to the back plate 10.

The connecting brackets 26L and 26R are attached to the bottom surface defining the lower end of the concave portion 23, positioned apart in the lateral direction. Additionally, the connecting brackets 26L and 26R are flat plate-shaped members extending in the longitudinal and vertical directions. Furthermore, through holes 29L and 29R penetrating in the lateral direction are formed in the connecting brackets 26L and 26R. Then, the connecting pins 43L and 43R, which will be described later, of the detachable device 30 are inserted into the through holes 29L and 29R. As a result, the connecting brackets 26L and 26R are pivotally connected to the connecting members 36L and 36R, which will be described later.

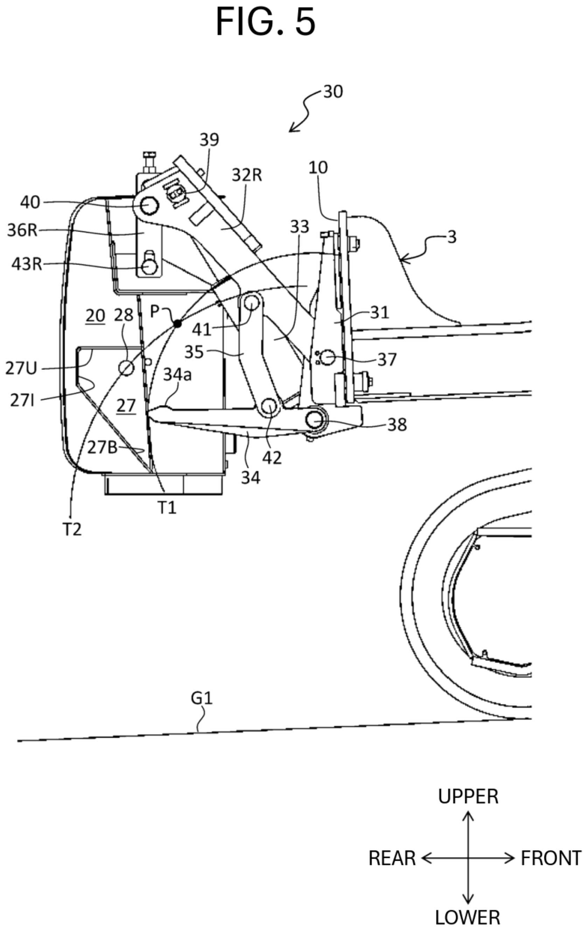

The concave groove 27 is recessed further rearward from the back wall of the concave portion 22. Additionally, the concave groove 27 extends in the vertical direction. More specifically, the concave groove 27 is defined at the upper end by the upper wall 27U, at the left and right ends by the side walls 27L and 27R, at the back end by the back wall 27I (see Fig. 5), and at the lower end by the lower wall 27B. Then, during the process of mounting the counterweight 20 on the back plate 10, the tip part of the auxiliary arm 34, which will be described later, of the detachable device 30 enters the concave groove 27. The concave groove 27 is an example of a recessed concave portion from the ventral surface 21 of the counterweight 20. However, this concave portion is not limited to a groove shape.

Note that the pair of side walls 27L and 27R in this embodiment are parallel. That is, the concave groove 27 has the same width in the lateral direction at all positions. Additionally, the lower wall 27B in this embodiment is inclined upward toward the rear (in other words, inclined downward toward the front) to avoid interference with the tip part of the auxiliary arm 34 during the process of mounting the counterweight 20 on the back plate 10.

The pin 28 has a cylindrical shape. The pin 28 is fixed inside the concave groove 27. That is, the pin 28 is attached on the counterweight 20 at a position lower than the connecting brackets 26L and 26R (where the connecting members 36L and 36R are connected). More specifically, both axial ends of the pin 28 are fixed to the pair of side walls 27L and 27R of the concave groove 27. Additionally, as shown in Fig. 5, the pin 28 is spaced apart from the upper wall 27U, back wall 27I, and lower wall 27B of the concave groove 27. That is, a space is formed between the pin 28 and the upper wall 27U, back wall 27I, and lower wall 27B of the concave groove 27, into which the tip part of the auxiliary arm 34 can enter. However, specific examples of the engagement member are not limited to the pin 28.

The detachable device 30 is a device for attaching and detaching the counterweight 20 to and from the back plate 10. As shown in Fig. 2, the detachable device 30 is fixed to the back surface 11 of the back plate 10 at the center in the lateral direction. The detachable device 30 mainly comprises a support bracket 31, a pair of main arms 32L and 32R, a hydraulic cylinder 33, an auxiliary arm 34, a link 35, and a pair of connecting members 36L and 36R.

The support bracket 31 is positioned at the center in the lateral direction of the back plate 10 (more specifically, between the first through holes 12L and 12R, and between the second through holes 13L and 13R). Additionally, the support bracket 31 supports the support shafts 37 and 38, which extend in the lateral direction. The support shaft 37 (first support shaft) is supported by the support bracket 31 at a position forward and upward of the support shaft 38 (second support shaft).

The main arms 32L and 32R have a long bar shape. The main arms 32L and 32R are positioned apart in the lateral direction, sandwiching the hydraulic cylinder 33. The base end parts of the main arms 32L and 32R are pivotally supported by the support shaft 37. Additionally, the tip parts of the main arms 32L and 32R support the support shafts 39 (third support shaft) and 40 (fourth support shaft), which extend in the lateral direction.

The hydraulic cylinder 33 comprises a cylinder tube 33a having a bottom chamber and a rod chamber inside, and a cylinder rod 33b. The hydraulic cylinder 33 extends and compresses by the supply and discharge of hydraulic oil. More specifically, the hydraulic cylinder 33 protrudes (extends) the cylinder rod 33b from the cylinder tube 33a by supplying hydraulic fluid to the bottom chamber and discharging hydraulic fluid from the rod chamber. On the other hand, the hydraulic cylinder 33 compresses (shrinks) the cylinder rod 33b into the cylinder tube 33a by discharging hydraulic oil from the bottom chamber and supplying hydraulic oil to the rod chamber.

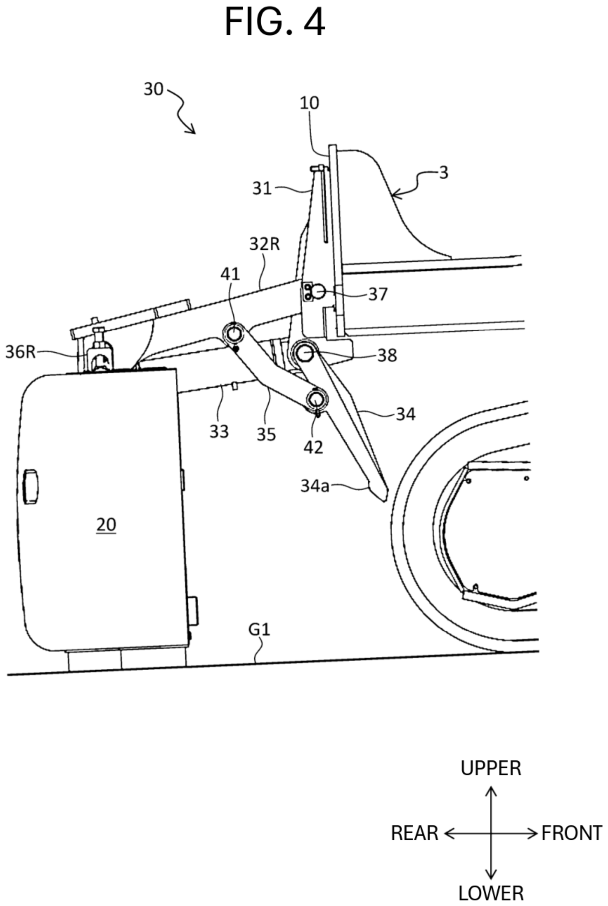

One end of the hydraulic cylinder 33 (the end on the bottom chamber side of the cylinder tube 33a) is pivotally supported by the support shaft 38. The other end of the hydraulic cylinder 33 (the protruding end of the cylinder rod 33b) is pivotally supported by the support shaft 39. As a result, when the hydraulic cylinder 33 extends, the main arms 32L and 32R rotate clockwise in Figures 4 to 10 (upward to mount the counterweight 20 on the back plate 10). On the other hand, when the hydraulic cylinder 33 compresses, the main arms 32L and 32R rotate counterclockwise in Figures 4 to 10 (downward to remove the counterweight 20 from the back plate 10).

The auxiliary arm 34 has a long bar shape. The base end part of the auxiliary arm 34 is pivotally supported by the support shaft 38. Then, the tip part of the auxiliary arm 34 enters the concave groove 27 during the process of mounting the counterweight 20 on the back plate 10. Furthermore, the tip part of the auxiliary arm 34 engages the pin 28 from the rear side just before the counterweight 20 is mounted on the back plate 10, pulling the pin 28 from the rear side to the front side (support bracket 31 side). More specifically, the tip part of the auxiliary arm 34 contacts the pin 28 from the rear side, pressing and pulling the pin 28 from the rear side to the front side. Furthermore, a locking part 34a for locking the pin 28 is attached at the tip part of the auxiliary arm 34.

The link 35 is pivotally connected to the main arm 32R and the auxiliary arm 34 via connecting shafts 41 and 42. More specifically, one end of the link 35 is pivotally supported by the connecting shaft 41, which is supported between the base end and the tip of the main arm 32R. Additionally, the other end of the link 35 is pivotally supported by the connecting shaft 42, which is supported between the base end and the tip of the auxiliary arm 34. The link 35 rotates (drives) the auxiliary arm 34 in conjunction with the rotation of the main arms 32L and 32R. That is, the auxiliary arm 34 rotates clockwise in Figures 4 to 10 in conjunction with the clockwise rotation of the main arms 32L and 32R. Additionally, the auxiliary arm 34 rotates counterclockwise in Figures 4 to 10 in conjunction with the counterclockwise rotation of the main arms 32L and 32R.

The connecting members 36L and 36R are pivotally supported by the support shaft 40 at positions apart in the lateral direction, sandwiching the main arms 32L and 32R (in the example of Fig. 2, at both ends of the support shaft 40). Additionally, the connecting members 36L and 36R pivotally support the connecting pins 43L and 43R. Then, by inserting the connecting pins 43L and 43R into the through holes 29L and 29R of the connecting brackets 26L and 26R, the counterweight 20 is pivotally connected to the connecting members 36L and 36R. That is, the counterweight 20 is pivotally connected to the tip parts of the main arms 32L and 32R via the connecting members 36L and 36R.

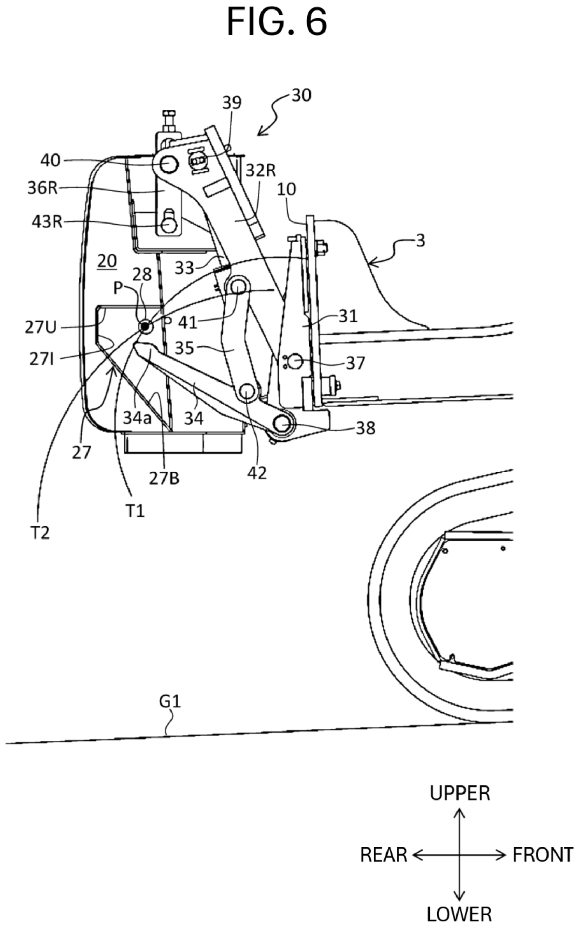

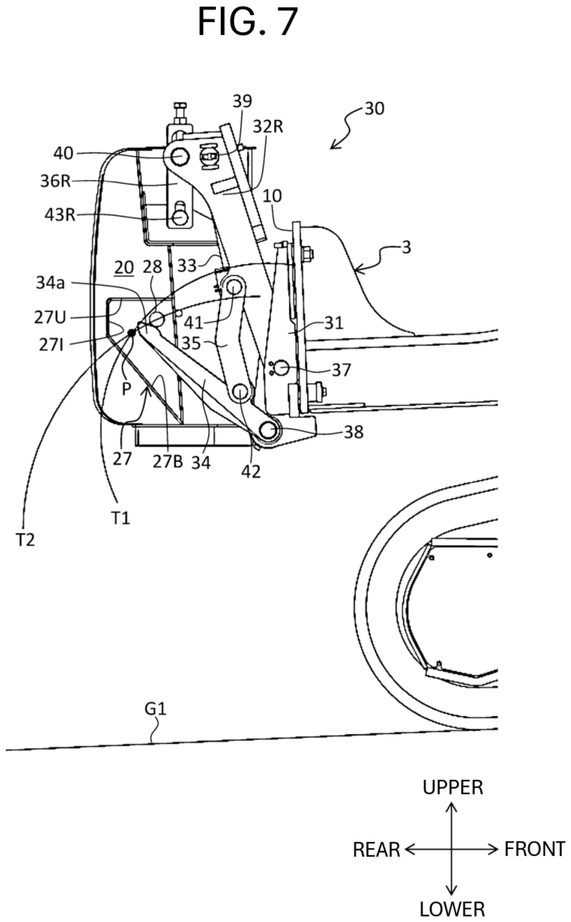

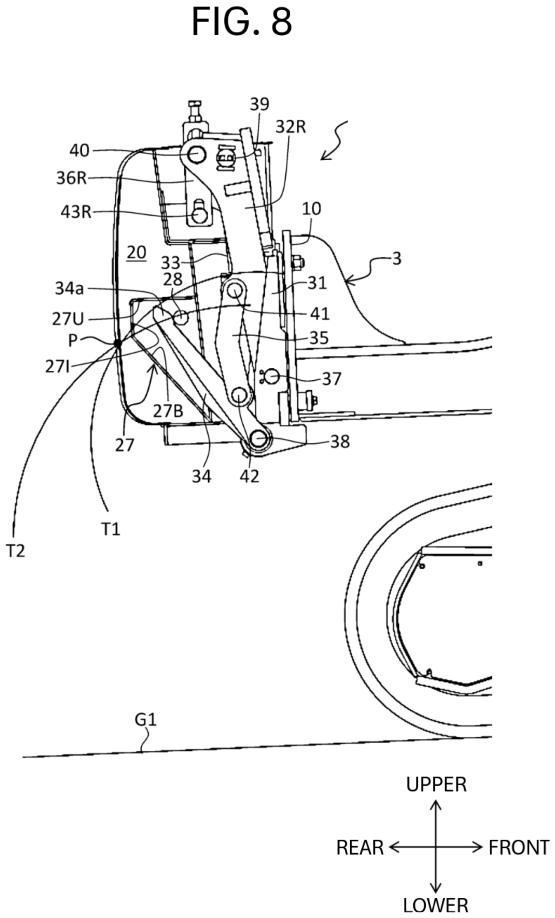

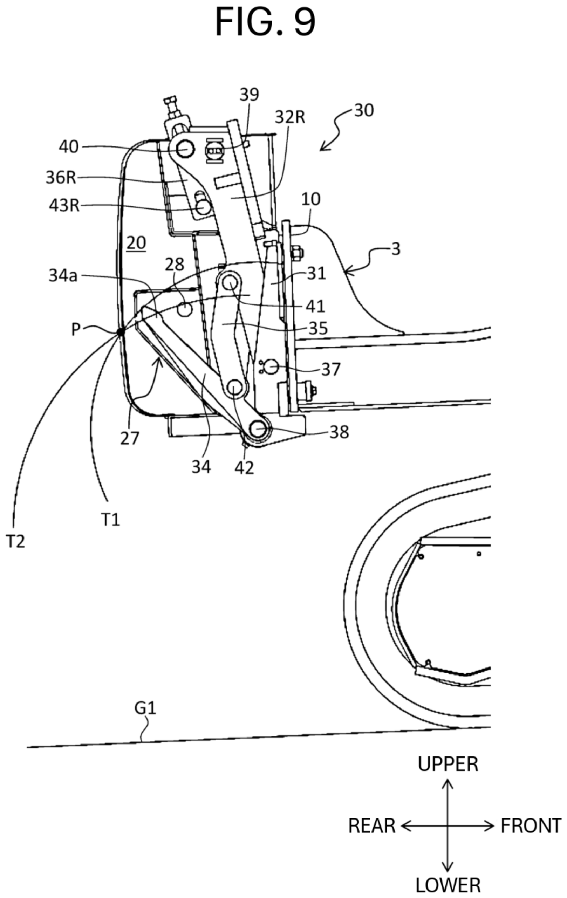

Referring to Figures 4 to 9, the movement of the detachable device 30 when mounting the counterweight 20 on the back plate 10 is explained, with the hydraulic excavator 1 placed on the upwardly inclined ground G1. FIG. 4 is a side view showing the state where the counterweight 20 placed on the upward-sloping ground G1 is connected to the connecting members 36L, 36R. FIG. 5 is a side view showing the state before the pin 28 passes through the movement trace T1 of the tip part of the auxiliary arm 34. FIG. 6 is a side view showing the state where the pin 28 is positioned on the movement trace T1 of the tip part of the auxiliary arm 34. FIG. 7 is a side view showing the state after the pin 28 has passed through the movement trace T1 of the tip part of the auxiliary arm 34. FIG. 8 is a side view showing the state where the counterweight 20 is completely mounted on the back plate 10. FIG. 9 is a side view showing the state after the counterweight 20 is completely mounted on the back plate 10 and hydraulic oil is discharged from the hydraulic cylinder 33.

As shown in FIGS. 5 to 9, the tip part of the auxiliary arm 34 rotates along the arc-shaped movement trace T1 centered on the support shaft 38. Meanwhile, in the process of mounting the counterweight 20 on the back plate 10 with the detachable device 30, the pin 28 moves along a different movement trace T2 from the movement trace T1. When viewed from the side of the hydraulic excavator 1, the movement traces T1 and T2 intersect at the intersection point P (predetermined position). More specifically, in the process of mounting the counterweight 20 on the back plate 10, the pin 28 crosses the movement trace T1 from the outside (rear side) to the inside (front side) of the arc. Additionally, in the process of mounting the counterweight 20 on the back plate 10, after the pin 28 passes through the intersection point P, the tip part of the auxiliary arm 34 passes through the intersection point P in a clockwise direction.

First, as shown in FIG. 4, the counterweight 20 is placed on the upwardly inclined ground G1 behind the hydraulic excavator 1, and the hydraulic cylinder 33 is compressed to connect the connecting members 36L, 36R to the connecting brackets 26L, 26R. Then, by extending the hydraulic cylinder 33, as shown in FIG. 5, the main arms 32L, 32R and the auxiliary arm 34 rotate clockwise in conjunction, and the counterweight 20 connected to the connecting members 36L, 36R is separated from the upwardly inclined ground G1. Furthermore, as shown in FIGS. 6 to 9, in the process of the counterweight 20 approaching the back plate 10, the tip part of the auxiliary arm 34 rotating clockwise enters the concave groove 27.

Here, as shown in FIGS. 5 to 9, when the hydraulic excavator 1 is placed on the upwardly inclined ground G1, the back surface 11 of the back plate 10 is inclined such that the upper side is positioned more rearward and the lower side is positioned more forward. In other words, the back surface 11 of the back plate 10 is perpendicular to the placement surface of the hydraulic excavator 1. On the other hand, since the counterweight 20 is rotatably connected to the connecting members 36L, 36R, the ventral surface 21 is always parallel to the vertical direction due to its own weight. Therefore, the back surface 11 of the back plate 10 and the ventral surface 21 of the counterweight 20 are closer on the upper side and more separated on the lower side.

Further extending the hydraulic cylinder 33, as shown in FIG. 6, the pin 28 reaches the movement trace T1 (i.e., intersection P). At this time, the tip part of the auxiliary arm 34 is still positioned below the pin 28 (i.e., upstream of the intersection P in the rotation direction). In the example of FIG. 6, the tip part of the auxiliary arm 34 is positioned directly below the pin 28 (in other words, the tip part of the auxiliary arm 34 and the pin are positioned on a straight line extending in the vertical direction), but the specific positional relationship is not limited to this.

Further extending the hydraulic cylinder 33, as shown in FIG. 7, after the pin 28 passes the movement trace T1 on the front side, the tip part of the auxiliary arm 34 passes the intersection P. Also, after the tip part of the auxiliary arm 34 passes the intersection P, the tip part of the auxiliary arm 34 contacts the pin 28. More specifically, the auxiliary arm 34 first contacts behind and below the center of the cylindrical pin 28.

Further extending the hydraulic cylinder 33, as shown in FIG. 8, the tip part of the auxiliary arm 34 rotating clockwise slides along the outer peripheral surface of the pin 28 and moves around to the rear of the pin 28, pulling the pin 28 to the front side. As a result, the counterweight 20 rotates counterclockwise around the connecting pins 43L, 43R. As a result, the back surface 11 of the back plate 10 and the ventral surface 21 of the counterweight 20 become parallel, and the counterweight 20 is mounted on the back plate 10 (more specifically, the first bosses 24L, 24R are coaxially positioned with the first through holes 12L, 12R in the longitudinal direction, and the second bosses 25L, 25R enter the second through holes 13L, 13R).

Then, after fixing the counterweight 20 to the back plate 10 with bolts, the hydraulic oil is discharged from the cylinder tube 33a (i.e., both the bottom chamber and the rod chamber). As a result, as shown in FIG. 9, the main arms 32L, 32R and the auxiliary arm 34 rotate counterclockwise. As a result, the tip part of the auxiliary arm 34 is separated from the pin 28. On the other hand, since the counterweight 20 is fixed to the back plate 10, the counterweight 20 does not move.

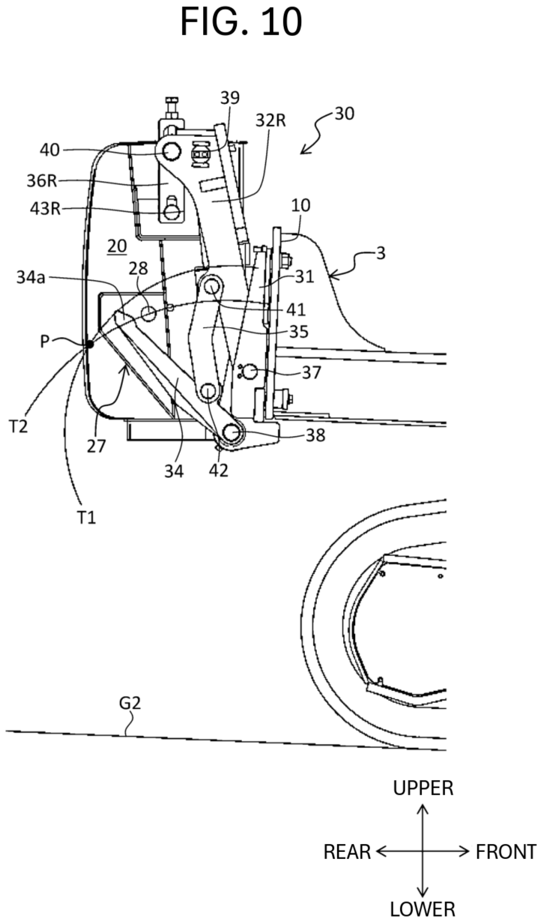

FIG. 10 is a diagram showing a state corresponding to FIG. 8 of the hydraulic excavator 1 placed on the downwardly inclined ground G2. As shown in FIG. 10, when the hydraulic excavator 1 is placed on the downwardly inclined ground G2, the back surface 11 of the back plate 10 is inclined such that the upper side is positioned more forward and the lower side is positioned more rearward. On the other hand, since the counterweight 20 is rotatably connected to the connecting members 36L, 36R, the ventral surface 21 is always parallel to the vertical direction due to its own weight. Therefore, the back surface 11 of the back plate 10 and the ventral surface 21 of the counterweight 20 are more separated on the upper side and closer on the lower side.

Therefore, when the hydraulic cylinder 33 is extended, after the lower end of the counterweight 20 contacts the back plate 10, the upper end of the counterweight 20 approaches the back plate 10, and the counterweight 20 is mounted on the back plate 10. At this time, as shown in FIG. 10, the tip part of the auxiliary arm 34 does not contact the pin 28. Furthermore, if the inclination angle of the downwardly inclined ground G2 increases, the tip part of the auxiliary arm 34 contacts the inner wall 27I of the concave groove 27 before the lower end of the counterweight 20 contacts the back plate 10.

According to the above embodiment, for example, the following operation and effect are achieved.

According to the above embodiment, when the hydraulic excavator 1 is placed on the upwardly inclined ground G1, in the process of mounting the counterweight 20 on the back plate 10, the tip part of the auxiliary arm 34 pulls the pin 28 to the front side. As a result, the counterweight 20 can be properly mounted on the back plate 10 even on the upwardly inclined ground G1.

Also, according to the above embodiment, by attaching a locking part 34a at the tip part of the auxiliary arm 34, the weight of the counterweight 20 is applied to the locking part 34a, preventing the pin 28 from detaching from the tip part of the auxiliary arm 34. As a result, in the process of mounting the counterweight 20 on the back plate 10, the pin 28 can be reliably pulled to the front side.

Also, according to the above embodiment, the lower wall 27B defining the lower end of the concave groove 27 is inclined upward toward the rear. As a result, in the process of mounting the counterweight 20 on the back plate 10, the weight of the counterweight 20 can be secured while avoiding interference of the tip part of the auxiliary arm 34 with the lower wall 27B.

Furthermore, according to the above embodiment, when the hydraulic excavator 1 is placed on the downwardly inclined ground G2, in the process of mounting the counterweight 20 on the back plate 10, the tip part of the auxiliary arm 34 contacts the inner wall 27I of the concave groove 27. As a result, it is possible to prevent the lower end of the counterweight 20 from colliding with the back plate 10.

Note that the above operation and effect are effective between the inclination angle θ1 of the upwardly inclined ground G1 and the inclination angle θ2 of the downwardly inclined ground G2. Then, the inclination angles θ1, θ2 vary depending on the fixed position of the pin 28, the length of the auxiliary arm 34, the length of the link 35, the connection positions of the connecting shafts 41, 42, and so on. For example, the longer the auxiliary arm 34, the larger the inclination angle θ1 at which the above operation and effect become effective. On the other hand, the shorter the auxiliary arm 34, the larger the inclination angle θ2 at which the above operation and effect become effective. More specifically, the longer the length of the auxiliary arm 34, the more the tip part of the auxiliary arm 34 enters the concave groove 27, necessitating the installation of the end of the lower wall 27B further to the rear. Also, if the length of the auxiliary arm 34 exceeds a certain length, the concave groove 27 penetrates the counterweight 20, making it impossible to install the inner wall 27I.

### [Modification Examples 1&2]

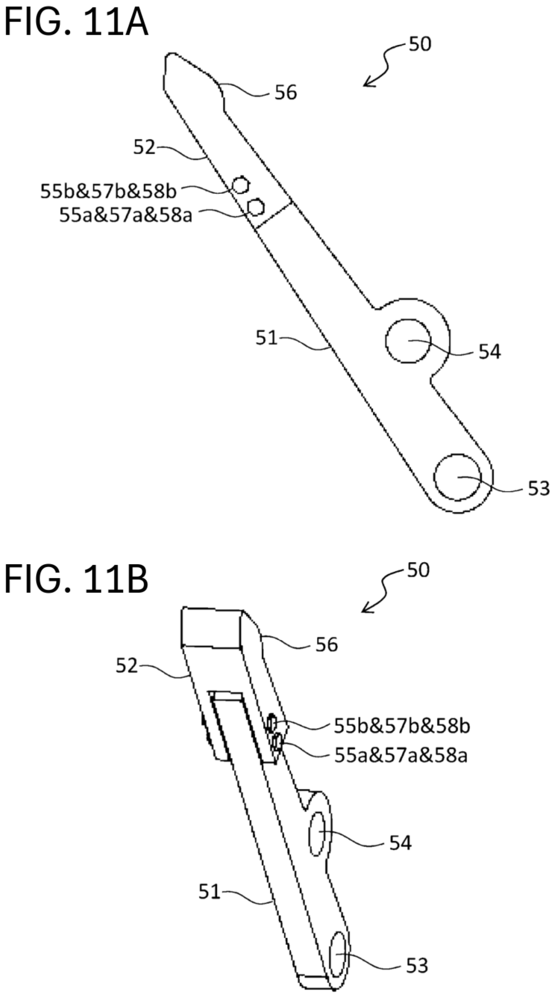

Referring to FIGS. 11A to 14B, the auxiliary arms 50, 60 according to modification examples 1&2 will be described. Note that the detailed description of the common points with the above embodiment is omitted, and the differences will be mainly described. The auxiliary arms 50, 60 according to modification examples 1, 2 differ from the auxiliary arm 34 according to the above embodiment in that they are configured to be extendable and be able to shorten.

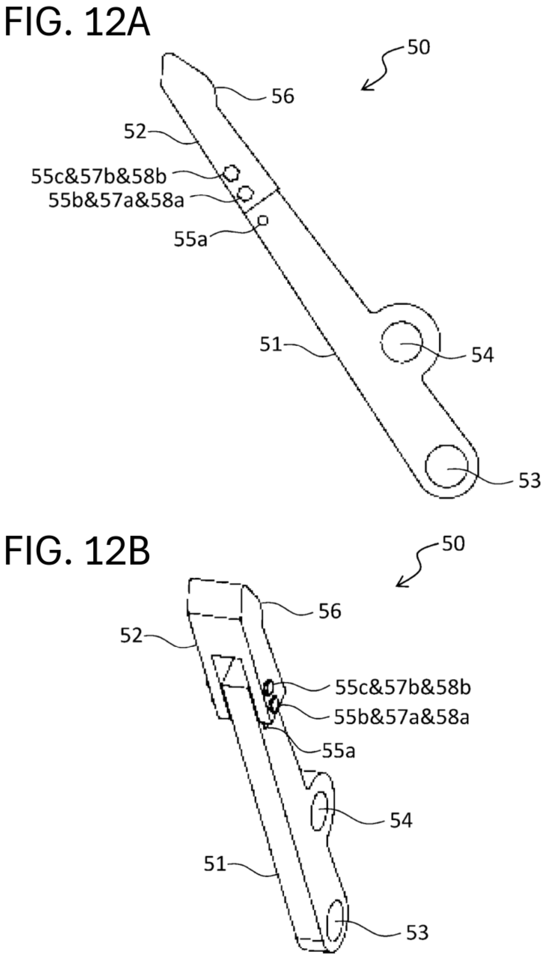

FIG. 11A is a side view of the auxiliary arm according to modification example 1 in a shortened state. FIG. 11B is a perspective view of the auxiliary arm according to modification example 1 in a shortened state. FIG. 12A is a side view of the auxiliary arm according to modification example 1 in an extended state. FIG. 12B is a perspective view of the auxiliary arm according to modification example 1 in an extended state. As shown in FIGS. 11A, 11B, 12A, and 12B, the auxiliary arm 50 according to modification example 1 is composed of a base end member 51 and a tip member 52. The base end member 51 and the tip member 52 are each elongated bar-shaped members.

The base end member 51 is formed with an insertion hole 53 for the support shaft 38, an insertion hole 54 for the connecting shaft 42, and three bolt holes 55a, 55b, 55c. The insertion hole 54 is formed on the tip side of the insertion hole 53. The bolt holes 55a, 55b, 55c are formed spaced apart in the longitudinal direction of the base end member 51 on the tip side of the insertion hole 54.

The tip member 52 is formed with a locking part 56 and bolt holes 57a, 57b. The locking part 56 is attached at the tip part of the tip member 52. The bolt holes 57a, 57b are formed spaced apart in the longitudinal direction of the tip member 52 on the base end side of the locking part 56. Additionally, the bolt holes 55a, 55b, 55c and the bolt holes 57a, 57b are formed with the same pitch.

Then, as shown in FIGS. 11A and 11B, by communicating the two bolt holes 55a, 55b on the base end side with the bolt holes 57a, 57b and screwing bolts 58a, 58b, the auxiliary arm 50 is in a shortened state. On the other hand, as shown in FIGS. 12A and 12B, by communicating the two bolt holes 55b, 55c on the tip side with the bolt holes 57a, 57b and screwing bolts 58a, 58b, the auxiliary arm 50 is in an extended state.

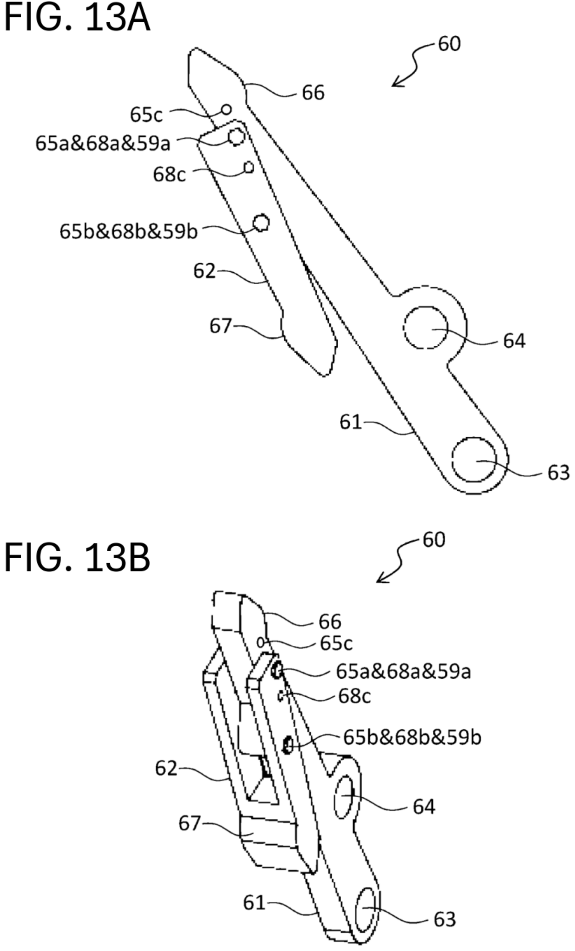

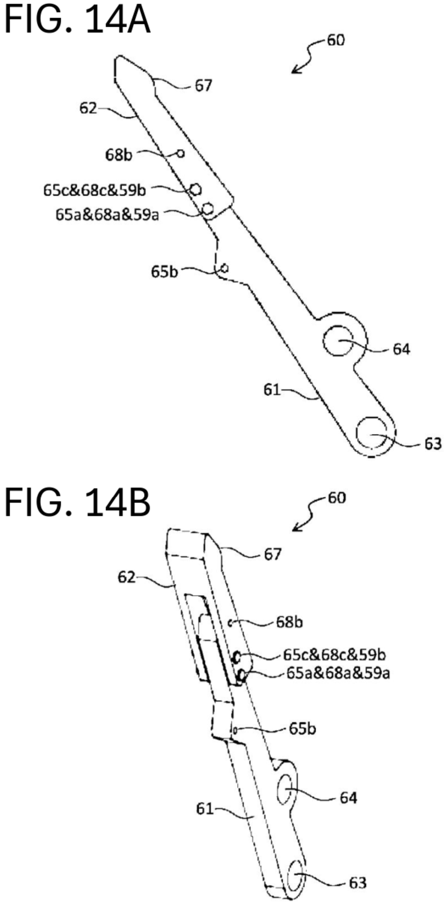

FIG. 13A is a side view of the auxiliary arm in a shortened state according to modification example 2. FIG. 13B is a perspective view of the auxiliary arm in a shortened state according to modification example 2. FIG. 14A is a side view of the auxiliary arm in an extended state according to modification example 2. FIG. 14B is a perspective view of the auxiliary arm in an extended state according to modification example 2. As shown in FIGS. 13A, 13B, 14A, and 14B, the auxiliary arm 60 according to modification example 2 is composed of a base end member 61 and a tip member 62. The base end member 61 and the tip member 62 are each a long bar-shaped member.

The base end member 61 is formed with an insertion hole 63 for the support shaft 38, an insertion hole 64 for the connecting shaft 42, three bolt holes 65a, 65b, 65c, and a first locking part 66. The insertion hole 64 is positioned in the direction towards the tip compared to the insertion hole 63. The bolt holes 65a, 65b, 65c are formed spaced apart in the longitudinal direction of the base end member 61 on the tip side of the insertion hole 64. More specifically, the bolt hole 65a is formed on the tip side of the bolt hole 65b and on the base end side of the bolt hole 65c. The first locking part 66 is formed at the tip part of the base end member 61.

The tip member 62 is formed with a second locking part 67 and bolt holes 68a, 68b, 68c. The second locking part 67 is attached at the tip part of the tip member 62. The bolt holes 68a, 68b, 68c are formed spaced apart in the longitudinal direction of the tip member 62 on the base end side of the second locking part 67. More specifically, the bolt hole 68c is formed on the tip side of the bolt hole 68a and on the base end side of the bolt hole 68b. Additionally, the bolt holes 65a, 65b and the bolt holes 68a, 68b are formed with the same pitch. Furthermore, the bolt holes 65a, 65c and the bolt holes 68a, 68c are formed with the same pitch.

Then, as shown in FIGS. 13A and 13B, by communicating the bolt holes 65a, 65b with the bolt holes 68a, 68b and screwing bolts 69a, 69b, the auxiliary arm 50 is in a shortened state. On the other hand, as shown in FIGS. 14A and 14B, by communicating the bolt holes 65a, 65c with the bolt holes 68a, 68c and screwing bolts 69a, 69b, the auxiliary arm 50 is in an extended state.

According to modification examples 1 and 2, the length of the auxiliary arms 50, 60 can be adjusted according to the inclination of the ground on which the hydraulic excavator 1 is placed. This allows the counterweight 20 to be properly mounted on the back plate 10 at a wider range of inclination angles θ1, θ2.

### [Modification Example 3]

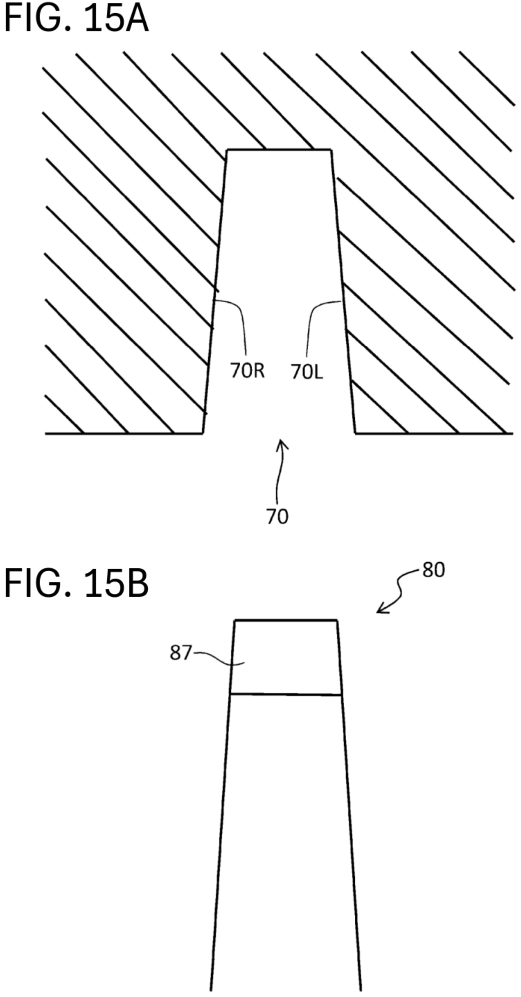

FIG. 15A is a diagram showing a concave groove according to modification example 3. FIG. 15B is a diagram showing an auxiliary arm according to modification example 3. The detailed description of the common points with the above embodiment is omitted, and the differences are mainly described. At least one of the concave groove 70 and the auxiliary arm 80 according to modification example 3 are different from the concave groove 27 and auxiliary arm 34 of the above embodiment, as they have the function of aligning the back plate 10 and the counterweight 20 in the lateral direction during the process of mounting the counterweight 20 onto the back plate 10.

As shown in FIG. 15A, the concave groove 70 according to modification example 3 has a tapered shape with the width in the lateral direction narrowing towards the rear. More specifically, the pair of side walls 70L, 70R defining the left and right ends of the concave groove 70 according to modification example 3 are spaced wider on the front side and narrower on the rear side.

As shown in FIG. 15B, the auxiliary arm 80 according to modification example 3 has a tapered shape with the width in the lateral direction narrowing towards the tip part (rear when entering the concave groove 70). That is, the auxiliary arm 80 according to modification example 3 has a tapered shape from the base end part to the tip part.

According to modification example 3, the opening of the concave groove 70 is wide, and the tip part of the auxiliary arm 80 is narrow. Therefore, even if the lateral position of the counterweight 20 is slightly misaligned, the tip part of the auxiliary arm 80 can enter the concave groove 70. On the other hand, the back side of the concave groove 70 is narrow, and the base end part of the auxiliary arm 80 is thick. Therefore, if the lateral position of the counterweight 20 is misaligned, during the process of the auxiliary arm 80 entering the back side of the concave groove 70, the auxiliary arm 80 contacts the side walls 70L, 70R of the concave groove 70, correcting the counterweight 20 to its original position. The shapes of the concave groove 70 and the auxiliary arm 80 according to modification example 3 may both be adopted, or either one may be adopted.

The above-described embodiments are illustrative for explaining the present invention and are not intended to limit the scope of the present invention to those embodiments only. Those skilled in the art can implement the present invention in various other aspects without departing from the gist of the present invention.

### Reference Signs List

1: Hydraulic excavator, 2: Lower travel body (vehicle body), 3: Upper swing body (vehicle body), 4: Crawler, 5: Travel motor, 6: Swing device, 7: Swing frame, 8: Cab, 9: Front working machine, 9a: Boom, 9b: Arm, 9c: Bucket, 9d: Boom cylinder, 9e: Arm cylinder, 9f: Bucket cylinder, 10: Back plate, 11: Back, 12L,12R: First through hole, 13L,13R: Second through hole, 20: Counterweight, 21: Ventral surface, 22,23: Concave portion, 24L,24R: First boss, 25L,25R: Second boss, 26L,26R: Connecting bracket, 27,70: Concave groove (concave portion), 27B: Lower wall, 27I: Inner wall, 27L,27R,70L,70R: Side wall, 27U: Upper wall, 28: Pin (engaging member), 29L,29R: Through hole, 30: Detachable device, 31: Support bracket, 32L,32R: Main arm, 33: Hydraulic cylinder, 33a: Cylinder tube, 33b: Cylinder rod, 34,50,60,80: Auxiliary arm, 34a,56,66,67: Locking part, 35: Link, 36L,36R: Connecting member, 37,38,39,40: Support shaft, 41,42: Connecting shaft, 43L,43R: Connecting pin, 51,61: Base end member, 52,62: Tip member, 53,54,63,64: Insertion hole, 55,57,65,68: Bolt hole, 58,69: Bolt

## Claims

1. A working machine comprising;
a vehicle body, a counterweight disposed at the rear of the vehicle body, a support bracket fixed to the vehicle body, a main arm with a base end part pivotally supported by the support bracket and a tip part pivotally connected to the counterweight via a connecting member, and a hydraulic cylinder with a base end part pivotally supported by the support bracket and a tip part pivotally connected to the tip side of the main arm;
furthermore, the working machine can attach the counterweight to the vehicle body by rotating the main arm upward through the extension of the hydraulic cylinder, and remove the counterweight from the vehicle body by rotating the main arm downward through the compression of the hydraulic cylinder; wherein
an auxiliary arm is attached on the support bracket, which pulls in the counterweight towards the support bracket side by interlocking with the upward rotation of the main arm due to the extension of the hydraulic cylinder.

2. The working machine according to claim 1;
wherein the auxiliary arm is pivotally connected to the main arm via a link, and the base end part of the auxiliary arm is pivotally supported by the support bracket.

3. The working machine according to claim 2;
wherein the counterweight has an engagement member, and the auxiliary arm engages the tip of the auxiliary arm with the engagement member in response to the upward rotation of the main arm due to the extension of the hydraulic cylinder;
and the auxiliary arm pulls in the counterweight toward the support bracket side.

4. The working machine according to claim 3;
wherein the engaging member is provided on the counterweight at a position lower than the position where the connecting member is connected.

5. The working machine according to claim 3;
wherein the counterweight is provided with a concave portion recessed inward, and the engaging member is provided within the concave portion.

6. The working machine according to claim 3;
wherein the engaging member is a pin.

7. The working machine according to claim 3;
wherein the movement trace of the tip of the auxiliary arm and the movement trace of the engaging member intersect at a predetermined position when the main arm is rotated upward by the extension of the hydraulic cylinder;
and, when the engaging member is positioned at the predetermined position, the tip of the auxiliary arm is located below the engaging member, and the tip of the auxiliary arm pulls the engaging member from the rear side to the front side of the engaging member.

8. The working machine according to claim 5;
wherein the concave portion is formed in a groove shape, and at least one of the auxiliary arm and the concave portion is formed in a tapered shape.

9. The working machine according to claim 4;
wherein the auxiliary arm is configured to be extendable and be able to shorten.

10. The working machine according to claim 4;
wherein the tip part of the auxiliary arm is attached with a locking part for locking the engaging member.

11. The working machine according to claim 5;
wherein the concave portion is formed in a groove shape, and the lower wall defining the lower end of the groove-shaped concave portion is inclined upward toward the rear to avoid interference with the tip part of the auxiliary arm during the process of mounting the counterweight.
